(19) Europäisches Patentamt
European Patent Office
Office européen des brevets

(11) **EP 1 258 708 B1**

(12) **EUROPÄISCHE PATENTSCHRIFT**

(45) Veröffentlichungstag und Bekanntmachung des Hinweises auf die Patenterteilung:
**17.03.2010 Patentblatt 2010/11**

(51) Int Cl.:
*G01D 3/02* (2006.01)   *G01D 18/00* (2006.01)
*B60K 31/00* (2006.01)   *G08G 1/16* (2006.01)

(21) Anmeldenummer: **02008797.9**

(22) Anmeldetag: **19.04.2002**

(54) **Verfahren und Vorrichtung für die Bestimmung von Offsetwerten durch ein Histogrammverfahren**

Method and apparatus for determining offset-values using a histogram

Procédé et dispositif pour la détermination des décalages à l'aide d'un histogram

(84) Benannte Vertragsstaaten:
**DE FR GB IT**

(30) Priorität: **16.05.2001 DE 10123843**
**14.02.2002 DE 10205971**

(43) Veröffentlichungstag der Anmeldung:
**20.11.2002 Patentblatt 2002/47**

(73) Patentinhaber: **ROBERT BOSCH GMBH**
**70442 Stuttgart (DE)**

(72) Erfinder:
• **Winner, Hermann**
  **76467 Bietigheim (DE)**
• **Urban, Werner**
  **71665 Vaihingen/Enz (DE)**
• **Lueder, Jens**
  **70806 Kornwestheim (DE)**
• **Keller, Frieder**
  **76698 Ubstadt-Weiher (DE)**

(56) Entgegenhaltungen:
**EP-A- 0 685 706     US-A- 5 719 790**
**US-A- 5 732 379**

**Beschreibung**

Stand der Technik

Die Erfindung geht von einer Vorrichtung bzw. einem Verfahren Verfahren zur Bestimmung eines korrigierten Offsetwertes aus.

Bei der Adaptiven Geschwindigkeitsregelung ACC (ACC = Adaptive Cruise Control) wird für ein Fahrzeug die Einhaltung eines von der Geschwindigkeit abhängigen Abstands zum vorausfahrenden Fahrzeug geregelt. Durch die DE 197 22 947 C1 ist aus diesem Bereich ein Verfahren bekannt, bei dem unter anderem auch der zukünftige Kursverlauf eines Fahrzeuges mit dem ACC-System in die ACC-Regelung mit einbezogen wird. Hierzu wird der zukünftige Kursbereich wenigstens eines vorausfahrenden Fahrzeuges bestimmt und dann zu allen detektierten Fahrzeugen ein seitlicher Querversatz ermittelt Bei stationären Krümmungsverhältnissen der Fahrbahn, d.h. in einem Geradenstück oder im Bereich der konstanten Krümmung einer Kurve, lässt sich beim bekannten Verfahren auch leicht mit Hilfe eines Gier- oder Drehratensignals der zukünftige Fahrkorridor bestimmen.

Aus der DE 196 36 443 A1 ist ein System zur Überwachung von Sensoren in einem Fahrzeug bekannt. Dieses System enthält Mittel, mit denen wenigstens für zwei Sensoren, ausgehend von wenigstens den von Ihnen erzeugten Signalen, für die Sensoren gleich definierte Vergleichsgrößen ermittelt werden. Ferner enthält das System weitere Mittel, mit denen in Abhängigkeit von den wenigstens ermittelten Vergleichsgrößen, eine Referenzgröße ermittelt wird. Ausgehend von wenigstens der ermittelten Referenzgröße wird in Überwachungsmitteln wenigstens für einen Sensor eine Überwachung durchgeführt. Neben den Überwachungsmitteln enthält das System zusätzlich Mittel, mit denen wenigstens für einen Sensor eine Korrektur des von ihm erzeugten Signals, wenigstens in Abhängigkeit von der Referenzgröße, durchgeführt wird.

Aus der DE 44 19 364 A1 ist ein Verfahren zur Echtzeitermittlung des Offsetanteils eines Meßsignals bekannt. Das Meßsignal wird in festgelegten Zeitabständen in Form digitaler Meßwerte ermittelt. Die Meßwerte werden über eine festgelegte Zeitdauer in einem Histogramm abgespeichert. Ein in der festgelegten Zeitdauer am häufigsten gemessener Meßwertebereich wird als Offsetanteil des Meßsignals ermittelt.

Die Merkmale der Oberbegriffe der unabhängigen Ansprüche gehen aus der DE 44 19 364 A1 hervor.

Vorteile der Erfindung

Die Erfindung geht aus von einem Verfahren zur Ermittlung des Offsetwertes des Ausgangssignals eines Fahrzeugsensors,

- bei dem die Werte des Ausgangssignals des Fahrzeugsensors ermittelt werden,
- bei dem der Wertebereich des Ausgangssignals des Fahrzeugsensors in wenigstens zwei Teilbereiche (Intervalle, Klassen) eingeteilt wird,
- bei dem die Werte des Ausgangssignals den Teilbereichen zugeordnet werden,
- bei dem die Anzahl der den Teilbereichen zugeordneten Werte des Ausgangssignals repräsentierende Anzahlgrößen ermittelt werden,

Der vorteilhafte Kerngedanke der Erfindung besteht darin, dass die Anzahlgrößen durch wenigstens einen Tiefpass ermittelt werden. Die Ermittlung durch einen Tiefpass bietet sich vor allem deshalb an, da Tiefpassfunktionen ohne übertriebenen Aufwand beispielsweise in Steuergeräte-Software implementiert werden können.

Eine vorteilhafte Ausführungsform ist dadurch gekennzeichnet, dass

- den wenigstens zwei Teilbereichen (Intervallen, Klassen) jeweils ein eigener Tiefpass zugeordnet wird,
- wobei jeder der Tiefpässe die seinem Teilbereich zugeordnete Anzahlgröße ermittelt.

Vorteilhafterweise handelt es sich dabei um einen Tiefpass bzw. Tiefpässe mit Exponentialcharakteristik (dies hängt damit zusammen, dass sich Tiefpässe mit Exponentialcharakteristik besonders gut als Zähler eignen).

Eine besonders vorteilhafte Ausführungsform ist dadurch gekennzeichnet, dass

- derjenige Tiefpass, in dessen zugeordneten Teilbereich der zu einem Abtastzeitpunkt festgestellte Wert des Ausgangssignals fällt, mit einem ersten Eingangssignal angesteuert wird und
- diejenigen Tiefpässe, in deren zugeordnete Wertebereiche der zum selben Abtastzeitpunkt festgestellte Wert des Ausgangssignals nicht fällt, mit einem zweiten Eingangssignal angesteuert werden,
- wobei sich das zweite Eingangssignal vom ersten Eingangssignal unterscheidet.

Nachdem festgestellt wurde, in welchen Teilbereich der ermittelte Sensorwert fällt, können die verschiedenen Tiefpässe in einfacher Weise mit unterschiedlichen Eingangssignalen angesteuert werden. Durch die unterschiedlichen Eingangssignale (z.B. 0 oder 1) ergeben sich unterschiedliche Ausgangssignale der Tiefpässe. Dies ist auch so gewünscht, da sich während des Zählvorgangs die Auffüllung der einzelnen Histogrammklassen (= Teilbereiche) ändert.

Eine vorteilhafte Ausgestaltung der Erfindung besteht darin, dass

- als Folge der Ansteuerung des Tiefpasses mit einem ersten Eingangssignal (k=1) eine Erhöhung der durch diesen Tiefpass ermittelten Anzahlgröße erfolgt und
- als Folge der Ansteuerung der Tiefpässe mit einem zweiten Eingangssignal (k=0) eine Erniedrigung der durch diese Tiefpässe ermittelten Anzahlgrößen erfolgt.

Die Erniedrigung der Anzahlgrößen in den vom Auffüllvorgang momentan nicht betroffenen Tiefpässen sorgt dafür, dass nicht alle Tiefpässe im Laufe der Zeit extrem hohe Zählerstände erreichen.

Eine weitere Ausgestaltung der Erfindung besteht darin,

- dass aus wenigstens zwei aufeinanderfolgend ermittelten Werten des Ausgangssignals des Fahrzeugsensors ein erster Mittelwert auf eine erste Art ermittelt wird und
- dass anstelle der Werte des Ausgangssignals des Fahrzeugsensors die Mittelwerte erster Art den Teilbereichen zugeordnet werden.

Damit gehen nicht mehr die Ausgangssignale der Fahrzeugsensors selbst, sondern Mittelwerte von diesen Ausgangssignalen in das Histogramm ein. Dies erlaubt eine Ausfilterung von eventuell auftretenden hochfrequenten Störungen, was sich positiv auf die Stabilität des Verfahrens auswirkt.

Beispielsweise kann es sich bei dem Fahrzeugsensor um einen Drehratensensor handeln, welcher die Gierbewegung des Fahrzeugs erfasst. Der ermittelte Offsetwert kann beispielsweise zur automatischen Abstandsregelung und/oder -steuerung (ACC) bei dem Kraftfahrzeug herangezogen werden.

Eine vorteilhafte Ausführungsform ist dadurch gekennzeichnet

- dass der Offsetwert durch die Bildung eines gewichteten Mittelwertes ermittelt wird und
- daß in der Bildung des gewichteten Mittelwerts derjenige Teilbereich (Intervall, Klasse) mit der größten Anzahlgröße sowie wenigstens ein benachbartes Intervall (Klasse) berücksichtigt werden.

Auf diese Art und Weise kann der Offsetwert sicher und robuster ermittelt werden, als wenn nur der Teilbereich mit der größten Anzahlgröße betrachtet wird. Das hängt damit zusammen, dass nun auch Varianzeffekte (d.h. die Streubreite der Daten) mit betrachtet werden können.

Eine vorteilhafte Ausführungsform ist dadurch gekennzeichnet dass in die Gewichtungsfaktoren des gewichteten Mittelwertes die linearen oder quadratischen Werte der Anzahlgrößen eingehen. Dieses Verfahren ist sehr einfach zu implementieren.

Dieses erfindungsgemäße Verfahren kann parallel zu anderen Verfahren zur Bestimmung des Offsetwertes eingesetzt werden. Durch eine Kombination oder parallele Anwendung verschiedener Verfahren zur Bestimmung des Offsetwertes kann beispielsweise ein genauerer korrigierter bzw. gemittelter Offsetwert ermittelt werden. Dies kann beispielsweise durch eine Mittelwertbildung erfolgen.

Bei dem Fahrzeugsensor handelt es sich um einen Sensor, der wenigstens eine Bewegung eines Fahrzeugs erfasst. In die Ermittlung des Offsetwertes gehen dabei wenigstens zwei der zu wenigstens zwei unterschiedlichen Zeitpunkten erfolgten Auswertungen des Ausgangssignals ein.

Die Ermittlung des Offsetwertes beruht auf einem Sortiervorgang von wenigstens zwei dieser Auswertungen des Ausgangssignals.

Vorteilhafterweise werden in der vorliegenden Erfindung durch die Auswertung des Ausgangssignals des Fahrzeugsensors die Bewegung des Fahrzeugs repräsentierende Bewegungswerte ermittelt. Der Sortiervorgang kann dabei derart ausgestaltet sein, dass die ermittelten Bewegungswerte der Größe nach sortiert werden.

Es ist vorteilhaft, wenn mindestens eine Teilmenge möglicher durch die Auswertung des Ausgangssignals ($\omega$) des Fahrzeugsensors (21b) erhaltbarer Bewegungswerte in wenigstens zwei Intervalle eingeteilt wird. Die Ermittlung des Offsetwertes kann dann vorteilhafterweise auf der Zuordnung der durch die Auswertung des Ausgangssignals erhaltenen Bewegungswerte zu den Intervallen beruhen, wobei insbesondere vorgesehen sein kann, daß die Ermittlung des Offsetwertes auf der Anzahl der den Intervallen zugeordneten Bewegungswerte beruht.

Es ist weiterhin von Vorteil, wenn bei der Auswertung der jeweiligen Anzahl der den wenigstens zwei Intervallen zugeordneten Bewegungswerte dasjenige Intervall mit der größten Anzahl der zugeordneten Bewegungswerte ermittelt wird und abhängig von diesem ermittelten Intervall der Offsetwert ermittelt wird.

Vorteilhafterweise kann der Offsetwert durch die Bildung eines gewichteten Mittelwertes ermittelt werden. In dieser Bildung des gewichteten Mittelwerts können beispielsweise dasjenige Intervall mit der größten Anzahl der zugeordneten Bewegungswerte sowie wenigsten ein benachbartes Intervall berücksichtigt werden.

In die Gewichtungsfaktoren des gewichteten Mittelwertes können vorteilhafterweise die linearen oder quadratischen Werte der Anzahl der zugeordneten Bewegungswerte eingehen.

Vorteilhafterweise kann die Anzahl der zugeordneten Bewegungswerte durch Tiefpassfilterung auf einen bestimmten Wertebereich begrenzt werden. Dabei kann es sich in einer vorteilhaften Ausgestaltung um eine Tiefpassfilterung mit Exponentialcharakteristik handeln.

Vorteilhafterweise wird weiterhin zumindest eine Teilmenge möglicher durch die Auswertung des Ausgangssignals des Fahrzeugsensors erhaltbarer Bewegungswerte in wenigstens zwei Intervalle eingeteilt wird. Die Ermittlung des Offsetwertes beruht auf der Zuordnung der durch die Auswertung des Ausgangssignals erhaltenen Bewegungswerte zu den Intervallen sowie einer Tiefpassfilterung.

Bei dieser Tiefpassfilterung wird vorteilhafterweise ein Tiefpass mit Exponentialcharakteristik verwendet.

Zeichnung

Ein Ausführungsbeispiel der Erfindung ist in der folgenden Zeichnung dargestellt und in der nachfolgenden Beschreibung näher erläutert.
Die Zeichnung besteht aus den Figuren 1 bis 7.

Fig. 1 zeigt schematisch ein Fahrzeugsteuerungssystem sowie dessen Ein- und Ausgabekanäle. Darin sind die für die vorliegende Erfindung maßgeblichen Funktionen eingezeichnet.

Fig. 2 zeigt eine spezielle Ausprägung der vorliegenden Erfindung für den Fall

- dass der Fahrzeugsensor ein Drehratensensor ist,
- dass die Ermittlung des Offsetwertes des Ausgangssignals des Drehratensensors abhängig vom Ausgangssignal des Drehratensensors selbst sowie von den Ausgangssignalen weiterer Sensoren ist, welche den Lenkradwinkel und die Raddrehzahlen erfassen und
- dass die Ermittlung des Offsetwertes des Ausgangssignals des Drehratensensors durch folgende vier Verfahren erfolgt:
  Stillstandsabgleichsverfahren, Lenkwinkelverfahren, Histogrammverfahren und Regressionsverfahrens.

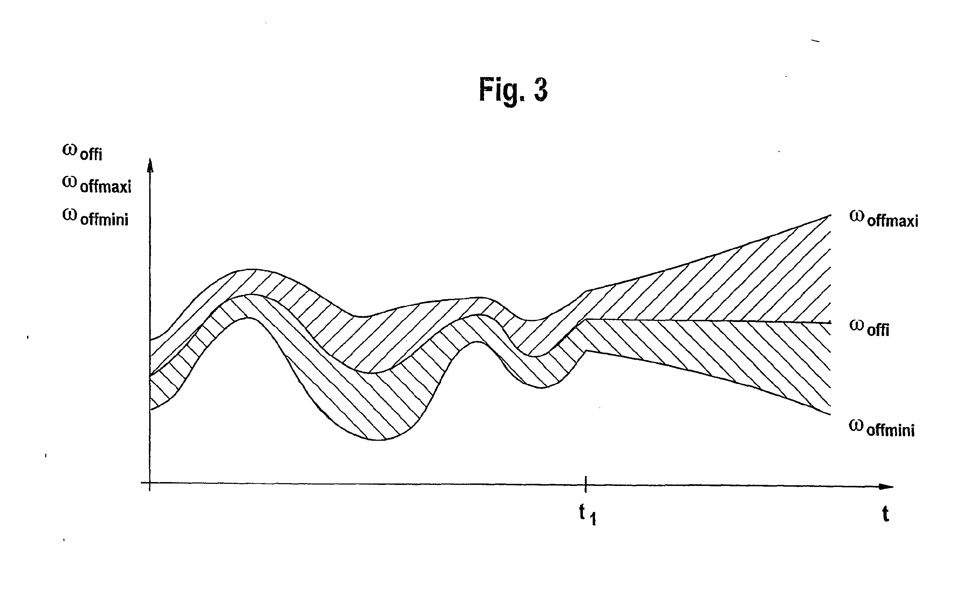

Fig. 3 zeigt in qualitativer Art und Weise den zeitlichen Verlauf eines ermittelten Gierratenoffsets sowie des zugehörigen Fehlerbandes.

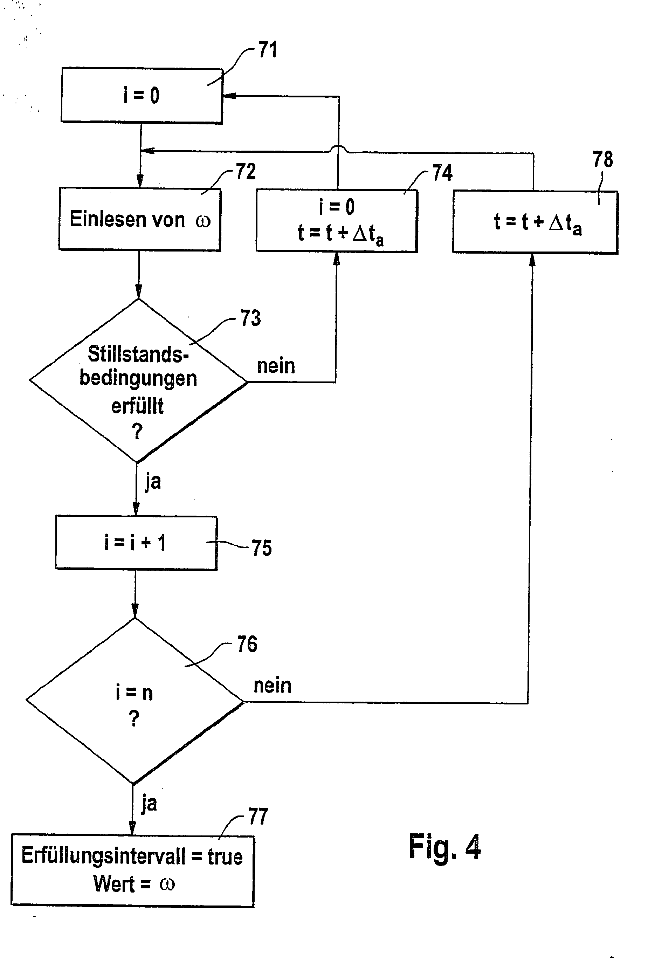

Fig. 4 zeigt in Form eines Flussdiagramms die Ermittlung eines Erfüllungsintervalls. Dieses wird für die Berechnung des Gierratenoffsetwertes mit dem Stillstandsabgleichsverfahren benötigt.

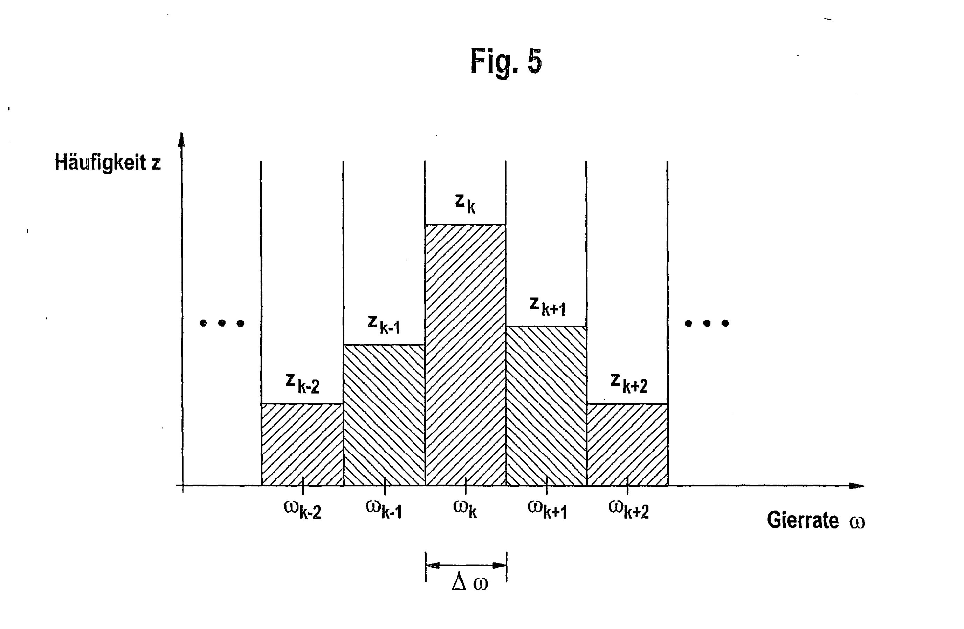

Fig. 5 zeigt in qualitativer Art und Weise ein Histogramm, wie es der Ermittlung des Offsetwertes durch das Histogrammverfahren zugrunde liegt.

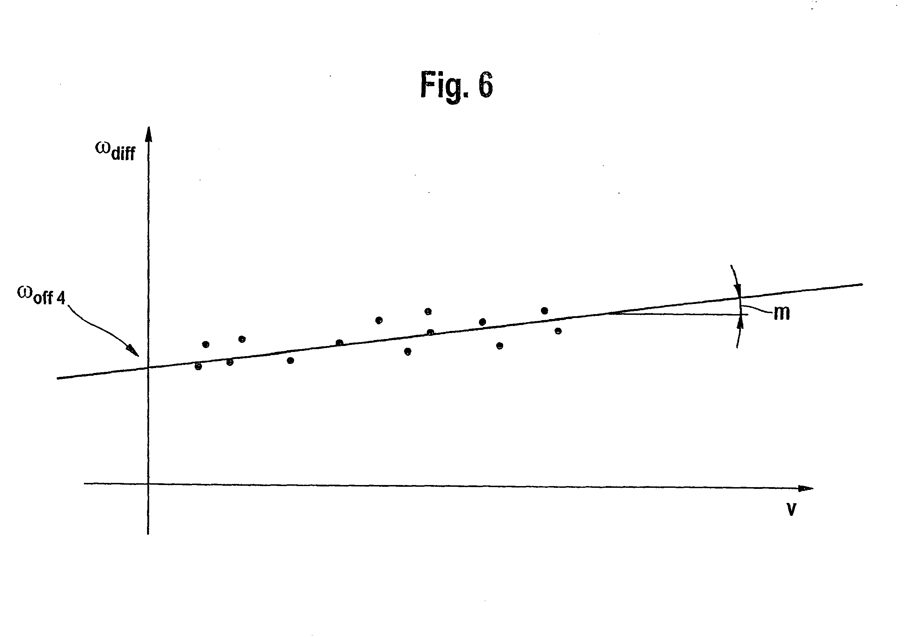

Fig. 6 zeigt in qualitativer Art und Weise eine x-y-Darstellung, wie sie der Ermittlung des Offsetwertes durch das Regressionsverfahren zugrunde liegt.

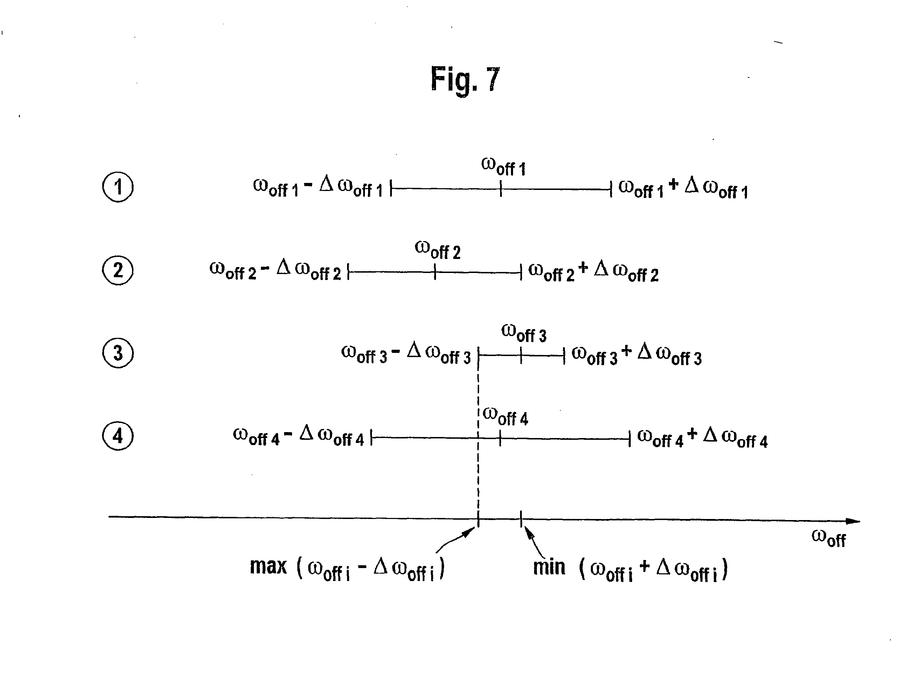

Fig. 7 zeigt in qualitativer Art und Weise für den Fall, dass bei den verschiedenen Verfahren neben dem Offsetwert zusätzlich ein Fehlerband ermittelt wird, wie der korrigierte Offsetwert durch eine Mittelwertbildung zwischen dem Minimum aller Maximalwerte und dem Maximum aller Minimalwerte ermittelt wird.

Ausführungsbeispiel

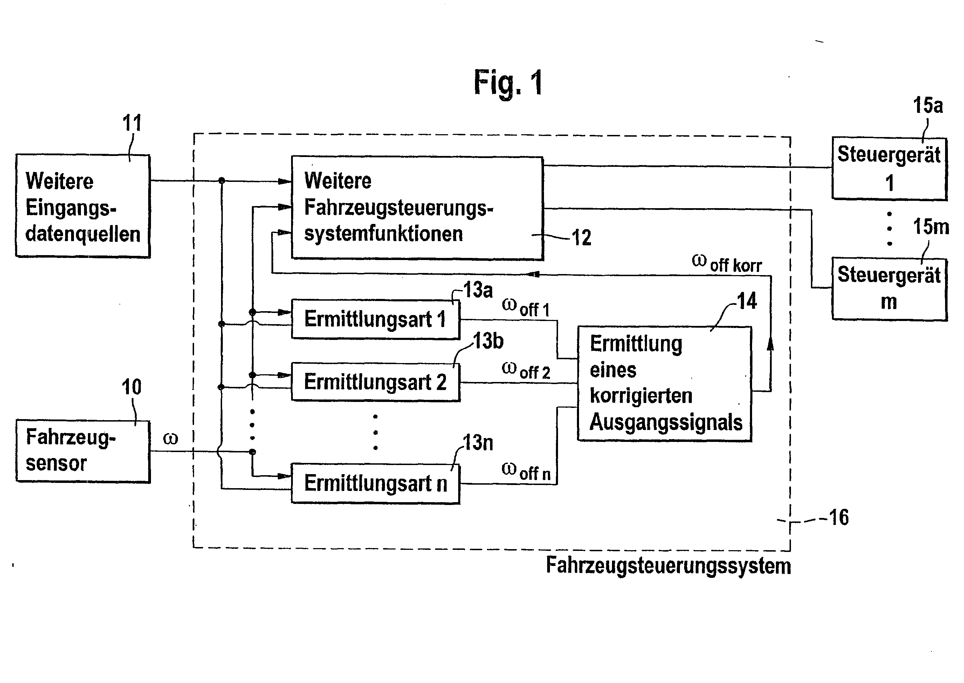

Die Erfindung soll anhand der Figuren 1 bis 7 beschrieben werden. Die spezielle Form des gewählten Ausführungsbeispiels - der Einsatz der erfindungsgemäßen Vorrichtung bzw. des erfindungsgemäßen Verfahrens in einem System zur automatischen Abstandsregelung in einem Kraftfahrzeug - soll keine Einschränkung der erfindungsgemäßen Idee darstellen.

In Fig. 1 sind in schematischer Art und Weise ein Fahrzeugsteuerungsystem 16 sowie die für die Erfindung wesentlichen Ein- und Ausgabekanäle dargestellt. Als Eingangssignale des Fahrzeugsteuerungssystems 16 stehen auf den Eingangskanälen die Ausgangssignale eines Fahrzeugsensors 10 sowie weitere Signale von nicht näher spezifizierten Eingangsdatenquellen 11 zur Verfügung.
Das Fahrzeugsteuerungssystem besteht

- aus den Blöcken 13a,...,13n, welche zur Ermittlung der den Offset des Ausgangssignals des Fahrzeugsensors 10 repräsentierenden Offsetwerte $\omega_{off1}$ ,..., $\omega_{offn}$ dienen,
- aus dem Block 14, in dem aus den in den Blöcken 13a,...,13n ermittelten Offsetwerten $\omega_{off1}$ ,..., $\omega_{offn}$ ein korrigierter Offsetwert $\omega_{offkorr}$ ermittelt wird und
- aus dem Block 12, welcher alle weiteren Funktionen des Fahrzeugsteuerungssystems 16 umfasst.

Die Ausgangssignale des Fahrzeugsteuerungssystems 16 gehen zu den m weiteren Steuergeräten 15a,...15m. Diese m weiteren Steuergeräte können zum Beispiel in einer speziellen Ausprägung das Motorsteuergerät, das ESP-Steuergerät (ESP = Elektronisches Stabilitäts-Programm) oder die Getriebesteuerung umfassen. Weiterhin denkbar ist, daß die Ausgangssignale des Fahrzeugssteuerungssystems 16 an ein Fahrerinformationssystem weitergeleitet werden

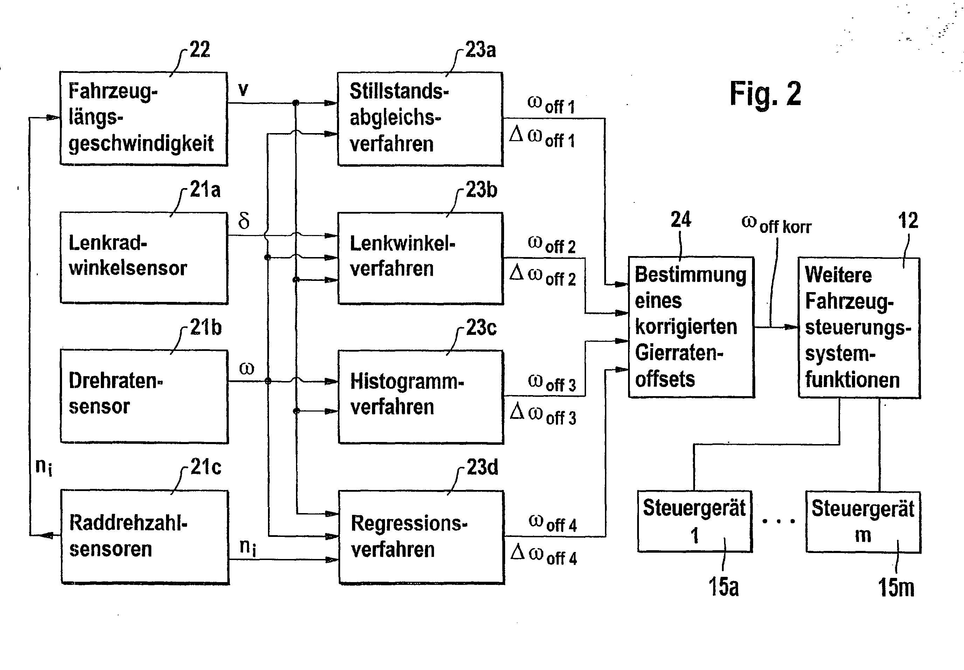

In Fig. 2 ist eine spezielle Ausprägung der vorliegenden Erfindung für den Fall eines Systems zur adaptiven Geschwindigkeitsregelung (ACC) dargestellt. Auch hier sind nur die für die Erfindung wesentlichen Sensoren sowie Ein- und Ausgangskanäle dargestellt. Die Radarsensoren sind beispielsweise nicht dargestellt.

In dieser speziellen Ausprägung ist der Fahrzeugsensor 10 als Drehratensensor 21b ausgebildet. Die weiteren Eingangsquellen 11 sind als Lenkradwinkelsensor 21a und als Raddrehzahlsensoren 21c ausgebildet.

Der Drehratensensor 21b liefert ein Ausgangssignal $\omega$, welches die Gierrate repräsentiert, der Lenkradwinkelsensor 21a liefert ein Ausgangssignal $\delta$, welches den Lenkradwinkel repräsentiert und die Raddrehzahlsensoren 21c liefern Ausgangssignale $n_i$, welche die Radrehzahlen der einzelnen Räder repräsentieren.

Diese Ausgangssignale $\omega$, $\delta$ und $n_i$ sowie das die Fahrzeuglängsgeschwindigkeit repräsentierende Signal v gehen als Eingangssignale in das Fahrzeugsteuerungssystem 16 ein.

Die Fahrzeuglängsgeschwindigkeit wird dabei im allgemeinen nicht direkt durch einen Sensor erfasst, sondern wird aus den von den Raddrehzahlsensoren 21c gelieferten Signalen $n_i$, welche die Raddrehzahlen der einzelnen Räder repräsentieren, ermittelt. Diese Ermittlung kann beispielsweise im Steuergerät einer Fahrdynamikregelungsanlage (ESP) erfolgen.

Im Fahrzeugsteuerungssystem 16 erfolgt die Ermittlung des Offsetwertes des Ausgangssignals $\omega$ des Drehratensensors 21b auf folgende vier Arten:

- durch ein Stillstandsabgleichsverfahren 23a,
- durch ein Lenkwinkelverfahren 23b,
- durch ein Histogrammverfahren 23c und
- durch ein Regressionsverfahren 23d.

Das Stillstandsabgleichsverfahren 23a benötigt als Eingangssignale das die Fahrzeuglängsgeschwindigkeit repräsentierende Signal v sowie das die Gierrate repräsentierende Signal $\omega$. Der Lenkwinkelverfahren 23b benötigt neben diesen beiden Größen zusätzlich noch das den Lenkradwinkel repräsentierende Signal $\delta$. Als Eingangssignal für das Histogrammverfahren 23c werden das die Gierrate repräsentierende Signal $\omega$ sowie das die Fahrzeuglängsgeschwindigkeit repräsentierende Signal v benötigt. Das Regressionsverfahren 23d benötigt als Eingangssignale die die Radrehzahlen repräsentierenden Signale $n_i$, das die Gierrate repräsentierende Signal $\omega$ sowie das die Fahrzeuglängsgeschwindigkeit repräsentierende Signal v

Als Ausgangssignale liefert das Stillstandsabgleichsverfahren 23a ein Signal $\omega_{off1}$, welches einen Näherungswert für den Gierratenoffset des Drehratensensors 21b repräsentiert sowie ein weiteres Signal $\Delta\omega_{off1}$ , welches die halbe Breite des zugehörigen Fehlerbandes repräsentiert. Das Lenkwinkelverfahren 23b liefert ein Signal $\omega_{off2}$, welches einen Näherungswert für den Gierratenoffset des Drehratensensors 21b repräsentiert sowie ein weiteres Signal $\Delta\omega_{off2}$, welches die halbe Breite des zugehörigen Fehlerbandes repräsentiert. Das Histogrammverfahren 23c liefert ein Signal $\omega_{off3}$, welches den Gierratenoffset des Drehratensensors 21b repräsentiert sowie ein weiteres Signal $\Delta\omega_{off3}$, welches die halbe Breite des zugehörigen Fehlerbandes repräsentiert. Das Regressionsverfahren 23d liefert ein Signal $\omega_{off4}$, welches den Gierratenoffset des Drehratensensors 21b repräsentiert sowie ein weiteres Signal $\Delta\omega_{off4}$, welches die halbe Breite des zugehörigen Fehlerbandes repräsentiert.

Bis jetzt wurde zwischen Signalen und den von den Signalen repräsentierten physikalischen Größen unterschieden. Der übersichtlicheren Darstellung halber soll im folgenden diese Unterscheidung nicht mehr in aller Strenge beibehalten werden. Insbesondere sollen im folgenden die Größen $\omega$, $\delta$, $n_i$, v, $\omega_{off1}$, $\omega_{off2}$, $\omega_{off3}$, $\omega_{off4}$, $\Delta\omega_{off1}$, $\Delta\omega_{off2}$, $\Delta\omega_{off3}$ und $\Delta\omega_{off4}$ nicht mehr nur die Signale, sondern auch die von den Signalen repräsentierten Größen bezeichnen. Zur Unterscheidung dient die Regel, daß der entsprechenden Größe das Wort "Signal" vorangestellt ist, wenn damit das Signal und nicht die physikalische Größe gemeint ist.

Das Fehlerband ist ein Maß für den maximalen absoluten Fehler, mit dem die den Offset des Ausgangssignals des Drehratensensors 21b repräsentierende Größe behaftet ist.

Am Beispiel des Stillstandsabgleichverfahrens bedeutet dies dass der wahre Offsetwert des Gierratensensors mit hoher Wahrscheinlichkeit zwischen den Werten $(\omega_{off1}-\Delta\omega_{off1})$ und $(\omega_{off1} + \Delta\omega_{off1})$ liegt. Damit wird auch zugleich der Begriff der "halben Breite $\Delta\omega_{off1}$" anschaulich klar. Entsprechendes gilt auch für die Fehlerbänder bei den anderen drei Verfahren.

Aus diesen Näherungswerten $\omega_{off1},...,\omega_{off4}$ sowie den zugehörigen Breiten der Fehlerbänder wird im Mittel 24, welches eine spezielle Ausgestaltung des Mittels 14 darstellt, ein korrigierter Offsetwert $\omega_{offkorr}$ des Gierratensensors berechnet, welcher sich gegenüber den Größen $\omega_{off1},..., \omega_{off4}$ durch eine erhöhte Genauigkeit auszeichnet.

Dabei ist zu beachten, dass die vier verwendeten Verfahren, nämlich das Stillstandsabgleichsverfahren, das Lenkwinkelverfahren, das Histogrammverfahren und das Regressionsverfahren jeweils unterschiedliche Gültigkeitsbereiche, abhängig vom Fahrzustand, haben. Das bedeutet dass, abhängig vom Fahrzustand, möglicherweise nicht alle vier verwendeten Verfahren zugleich die den Offsetwert repräsentierenden Größen ermitteln. Bei denjenigen Verfahren, welche momentan keine den Offsetwert repräsentierende Größen ermitteln, wird die zuletzt mit diesem Verfahren ermittelte, gültige, den Offsetwert repräsentierende Größe genommen. Zugleich wird das zu dieser Größe ermittelte Fehlerband zeitlich aufgeweitet. Das bedeutet, dass das zugehörige Fehlerband um so breiter wird, je länger die letzte gültige Ermittlung dieser den Offsetwert repräsentierenden Größe zurückliegt. Dieser Rückgriff auf den zuletzt ermittelten Offsetwert erfordert für jedes Verfahren eine Speicherung von mindestens dem zuletzt ermittelten Offsetwert sowie der zuletzt ermittelten Fehlerbandbreite.

Diese Aufweitung des Fehlerbandes ist in Fig. 3 in qualitativer Art und Weise dargestellt. In diesem x-y-Diagramm ist entlang der Abszisse die Zeit t aufgetragen, in Ordinatenrichtung sind die Größen $\omega_{offi}$, $\omega_{offmini}$ und $\omega_{offmaxi}$ aufgetragen. Dabei kennzeichnet $\omega_{offi}$ den durch das i-te Verfahren ermittelten Offsetwert des Gierratensensors. $\omega_{offmini}$ ist der durch das Fehlerband definierte Minimalwert, d.h. $\omega_{offmini} = \omega_{offi} -\Delta\omega_{offi}$ und $\omega_{offmaxi}$ ist der durch das Fehlerband definierte Maximalwert, d.h. $\omega_{offmaxi} = \omega_{offi} + \Delta\omega_{offi}$. Es soll noch darauf hingewiesen werden, dass es durchaus möglich ist, für die Bestimmung von $\omega_{offmini}$ und $\omega_{offmaxi}$ aus $\omega_{offi}$ unterschiedliche $\Delta\omega_{offi}$ zu verwenden, d.h. $\omega_{offi}$ liegt nicht mehr exakt in der Mitte zwischen $\omega_{offmini}$ und $\omega_{offmaxi}$. Dies kann auch durch die Einführung von Gewichtungsfaktoren erreicht werden, d.h. $\omega_{offmini} = \omega_{offi} -c_1{}^*\Delta\omega_{offi}$ und $\omega_{offmaxi} = \omega_{offi} + c_2{}^*\Delta\omega_{offi}$.
Dabei sind $c_1$ und $c_2$ unterschiedliche Gewichtungsfaktoren, welche konstant sein können, aber auch von Parametern wie beispielsweise der Zeit abhängen können.

Der Gültigkeitsbereich für das i-te Verfahren erstrecke sich von der Zeit t=0 bis zur Zeit t = $t_1$. Für Zeiten t > $t_1$ seien die Gültigkeitsvoraussetzungen nicht mehr erfüllt. Deshalb werden für t > $t_1$ keine weiteren Offsetwerte mehr ermittelt, sondern es wird auf den zur Zeit $t_1$ ermittelten Offsetwert zurückgegriffen. Das Fehlerband, gegeben durch die Werte $\omega_{offmini}$ und $\omega_{offmaxi}$, wird danach für t > $t_1$ kontinuierlich aufgeweitet.

Der ermittelte korrigierte Offsetwert $\omega_{offkorr}$ wird einem weiteren Block 12 zugeleitet, in welchem weitere Funktionen des Fahrzeugsteuerungssystems implementiert sind. Block 12 hat neben anderen nicht in Fig. 2 eingezeichneten Größen auch die Größe $\omega_{offkorr}$ als Eingangssignal.

Im folgenden wird näher auf die Blöcke 23a, 23b, 23c und 23d eingegangen, welche die den Offset des Ausgangssignals des Drehratensensors 21b repräsentierenden Größen $\omega_{off1},...,\omega_{off4}$ liefern.

Das Stillstandsabgleichsverfahren 23a stellt unabhängig vom momentanen Bewegungszustand des Fahrzeugs, also insbesondere auch im Falle eines nicht stillstehenden Fahrzeuges, die den Offset des Ausgangssignals des Drehratensensors 21b repräsentierende Größen $\omega_{off1}$ zur Verfügung.

Der Fall des Stillstands wird festgestellt, wenn die folgenden drei Bedingungen a), b) und c) zugleich erfüllt sind:

a) Die Längsgeschwindigkeit des Fahrzeugs ist kleiner als ein erster vorgegebener Maximalwert, welcher als Grenzgeschwindigkeit $v_G$ bezeichnet wird.

b) Die Gierrate $\omega$ ist kleiner als ein zweiter vorgegebener Maximalwert.

c) Die Gierbeschleunigung, das ist die zeitliche Ableitung der Gierrate, ist kleiner als ein dritter vorgegebener Maximalwert.

Bei einer sehr geringen Fahrzeuglängsgeschwindigkeit v können die dann vorliegenden sehr kleinen Raddrehzahlen $n_i$ von den Raddrehzahlsensoren nicht mehr erfasst werden und werden fälschlicherweise als Null erkannt. Dadurch wird in einer im Fahrzeug befindlichen Vorrichtung zur Ermittlung der Fahrzeuglängsgeschwindigkeit diese fälschlicherweise als verschwindend ermittelt. Die Grenzgeschwindigkeit $v_G$ ist diejenige Längsgeschwindigkeit des Fahrzeugs, welche eben noch als nicht verschwindend erkannt wird. Für jede Längsgeschwindigkeit kleiner als die Grenzgeschwindigkeit $v_G$ wird fälschlicherweise die Längsgeschwindigkeit Null ermittelt.

Durch die Punkte b) und c) wird sichergestellt, dass ein Fahrzeug, welches mit verschwindender Längsgeschwindigkeit auf einer drehenden Platte steht, nicht als stillstehend erfasst wird.

Für den Stillstandsabgleich wird das Ausgangssignal $\omega$ des Drehratensensors 21b zu regelmäßigen diskreten Abtastzeitpunkten $t_i$ mit konstanten Zeitabständen $\Delta t_a$ in Block 23a eingelesen. Zugleich wird zu diesen Abtastzeitpunkten

$t_i$ geprüft, ob die den Stillstand definierenden Bedingungen a), b) und c) erfüllt sind. Außerdem wird ein Zeitintervall $T_n$ = $n \cdot \Delta t_a$ festgelegt, wobei n eine ganze Zahl größer als 2 ist. Sind die den Stillstand definierenden Bedingungen a), b) und c) während eines Zeitintervalls $T_n$ zu allen in dieses Intervall fallenden Abtastzeitpunkten $t_i$ erfüllt, dann gilt der Stillstandsfall als gegeben. Ein solches Zeitintervall $T_n$, in welchem die den Stillstand definierenden Bedingungen a), b) und c) alle zugleich zu jedem in dieses Intervall fallenden Abtastzeitpunkt erfüllt sind, wird im folgenden als Erfüllungsintervall bezeichnet.

Der Verfahrensablauf zur Detektion eines Erfüllungsintervalls ist in Fig. 4 dargestellt. In Block 71 wird die ganzzahlige Variable i=0 gesetzt. Anschliessend wird in Block 72 das Ausgangssignal ω des Gierratensensors eingelesen. In Block 73 wird geprüft, ob alle drei Stillstandsbedingungen a), b) und c) zugleich erfüllt sind. Ist dies der Fall, dann wird in Block 75 die Zahl i um 1 inkrementiert. Ist dies nicht der Fall, dann wird in Block 74 i = 0 gesetzt und zugleich zu einem um den Zeitabstand $t_a$ späteren Zeitpunkt erneut mit Block 71 begonnen. Die Variable i gibt die Zahl der ununterbrochenen Erfüllungen aller drei den Stillstand definierenden Bedingungen a), b) und c) an. In Block 76 wird geprüft, ob diese Zahl i der ununterbrochenen Erfüllungen den Wert n erreicht hat. Falls dies der Fall ist, wird im Block 77 durch "Erfüllungsintervall=true" die Detektion eines Erfüllungsintervalls dokumentiert. Zugleich wird der Variablen "Wert" der aktuellste Wert ω des Ausgangssignals des Gierratensensors zugewiesen. Dabei handelt es sich im Ausführungsbeispiel um einen gefilterten Wert. Hat in Block 76 die Zahl i den Wert n noch nicht erreicht, dann wird zu einem um den Zeitabstand $t_a$ späteren Zeitpunkt (Block 78) erneut in Block 72 das Ausgangssignal des Gierratensensors ω eingelesen.

Sobald ein Erfüllungsintervall detektiert wurde, ist es vorteilhaft, die Länge der folgenden Zeitintervalle zu verkürzen. An die Stelle des Zeitintervalls $T_n$ tritt jetzt das kürzere Zeitintervall $T_m$ mit der Länge Zeitintervall $T_m = m \cdot \Delta t_a$ wobei m eine ganze Zahl kleiner als n ist. Erst wenn erneut der Fall des Nichtstillstandes detektiert wird, geht man wieder auf das längere Zeitintervall $T_n = n \cdot \Delta t_a$ zurück und behält diese Länge des Zeitintervalls wieder solange bei, bis erneut ein Erfüllungsintervall detektiert wird.

Für die Ermittlung des Offsetwertes $\omega_{off1}$ in Block 23a wird jeweils das letzte abgetastete Signal ω des vorletzten Erfüllungsintervalls verwendet. Eine Ausnahme bildet hier lediglich das erste Erfüllungsintervall, welches sich auch durch die größere Länge $T_a = n \cdot \Delta t_a$ auszeichnet. Da hier kein direkt vorhergehendes Erfüllungsintervall vorliegt, wird hier für die Ermittlung des Offsetwertes $\omega_{off1}$ in Block 23a das letzte abgetastete Signal ω in diesem Erfüllungsintervall verwendet. Anstelle des letzten abgetasteten Signals kann dabei auch ein gefiltertes oder gemitteltes oder sowohl gefiltertes als auch gemitteltes Signal verwendet werden.

Zur anschaulichen Erläuterung der Arbeitsweise des Stillstandsabgleichs in Block 23a werde die folgende geradlinige Fahrzeugbewegung mit verschwindender Gierrate und verschwindender Gierbeschleunigung betrachtet:

Phase 1: Das Fahrzeug fährt mit konstanter Längsgeschwindigkeit

Phase 2: Das Fahrzeug beginnt zu bremsen. Die Fahrzeuglängsgeschwindigkeit ist noch größer als die in a) definierte Grenzgeschwindigkeit $v_G$.

Phase 3: Der Bremsvorgang klingt aus. Die Fahrzeuglängsgeschwindigkeit ist bereits kleiner als die Grenzgeschwindigkeit $v_G$.

Phase 4: Das Fahrzeug befindet sich exakt im Stillstand.

Phase 5: Das Fahrzeug beginnt zu beschleunigen. Die Fahrzeuglängsgeschwindigkeit ist noch kleiner als die Grenzgeschwindigkeit $v_G$.

Phase 6: Der Beschleunigungsvorgang ist fortgeschritten. Die Fahrzeuglängsgeschwindigkeit ist größer als die Grenzgeschwindigkeit $v_G$.

In Phase 1 und Phase 2 sind Bedingung a) nicht erfüllt. Das Fahrzeug befindet sich nicht im Stillstand.

In Phase 3 sind alle drei Bedingungen erfüllt, deshalb wird der Fall des Stillstands angenommen, obwohl das Fahrzeug noch im Ausrollen begriffen war. Um die Weiterverarbeitung der ersten dort ermittelten Signale ω als den Fahrzeugstillstand repräsentierende Signale zu vermeiden, wurde das Zeitintervall $T_n$ eingeführt.

Die Länge des Zeitintervalls $T_n$ wird durch die erforderliche Berücksichtigung des Ausrollens bei Bremsvorgängen unterhalb der in a) definierten Grenzgeschwindigkeit $v_G$ sowie die erforderliche Berücksichtigung von Filterlaufzeiten des Signals ω in Block 23a festgelegt. Idealerweise ist die Länge des Zeitintervalls $T_n$ länger als eine angenommene realistische Dauer der Phase 3 sowie die Filterlaufzeiten.

In Phase 4 sind alle 3 Bedingungen a), b) und c) zu allen Abtastzeitpunkten $t_i$ erfüllt.

Deshalb wird, jetzt, jeweils über kürzere Zeitintervalle $T_m$, das Ausgangssignal des Drehratensensors 21b in Block 23a eingelesen und daraus der Gierratenoffset $\omega_{off1}$ aus dem vorletzten Erfüllungsintervall ermittelt.

Auch in Phase 5 sind alle 3 Bedingungen a), b) und c) zu allen Abtastzeitpunkten erfüllt, obwohl das Fahrzeug nicht mehr im Stillstand ist. Der Gierratenoffset $\omega_{off1}$ wird allerdings aus dem vorletzten Erfüllungsintervall ermittelt, welches noch idealerweise in die Phase 4 fällt, in welcher noch ein real stillstehendes Fahrzeug vorlag.

In Phase 6 sind nicht mehr die 3 Bedingungen a), b) und c) zugleich erfüllt, deshalb wird das Fahrzeug als nicht mehr im Stillstand befindlich angenommen und es werden keine weiteren Offsetwerte $\omega_{off1}$ ermittelt. Da sich das Fahrzeug nun in Bewegung befindet, können solange keine weiteren Offsetwerte $\omega_{off1}$ mehr ermittelt werden, bis ein erneuter Fahrzeugstillstand, charakterisiert durch die Erfüllung aller drei Bedingungen a), b) und c), eintritt.

Das Stillstandsabgleichsverfahren arbeitet auch beim nicht als stillstehend detektierten Fahrzeug. Im Fall des nicht als stillstehend detektierten Fahrzeuges wird der zuletzt ermittelte gültige Offsetwert $\omega_{off1}$ aus einem Speicher ausgelesen und weiter verwendet.

Allerdings wird das Fehlerband mit der halben Breite $\Delta\omega_{off1}$ nun zeitlich aufgeweitet. Das bedeutet anschaulich, dass ein umso breiteres Fehlerband angenommen wird, je mehr Zeit seit der letzten gültigen Ermittlung des Offsetwertes $\omega_{off1}$ verstrichen ist.

Im Gegensatz zum Stillstandsabgleichsverfahren arbeitet das Lenkwinkelverfahren nur beim nicht stillstehenden Fahrzeug. Grundlage der Berechnung des Gierratenoffsets beim Lenkwinkelverfahren ist die Beziehung

$$\omega_{LWS} = \frac{1}{i_L \cdot l} \cdot \frac{v}{1 + \frac{v^2}{v_{ch}^2}} \cdot \delta \qquad , \qquad (1)$$

welche aus der Fachliteratur bekannt ist (siehe z.B. "Bosch - Kraftfahrtechnisches Taschenbuch", 23. Auflage, Seite 707). Neben der Fahrzeuglängsgeschwindigkeit v und dem Lenkradwinkel $\delta$ gehen in diese Beziehung die Lenkübersetzung $i_L$, eine charakteristische Fahrzeuggeschwindigkeit $v_{ch}$ und der Radstand 1 ein. Mit Lenkübersetzung ist die mechanische Übersetzung zwischen dem Lenkradwinkel $\delta$ und dem Lenkwinkel der Vorderräder bezeichnet.

Der Offset $\omega_{off2}$ ergibt sich als Differenz zwischen der aus obiger Beziehung (1) berechneten Gierrate $\omega_{LWS}$ und der vom Gierratensensor gemessenen Gierrate $\omega$.

Neben der Berechnung eines Offsetwertes $\omega_{off2}$ erlaubt Beziehung (1) auch die Berechnung der Breite eines Fehlerbandes über das Fehlerfortpflanzungsgesetz.

Das in Fig. 5 dargestellte Histogrammverfahren beruht auf einer statistischen Auswertung der durch den Drehratensensor 21b gelieferten Gierratensignale $\omega$. Dabei werden nur diskrete Gierratenwerte ..., $\omega_{k-1}$, $\omega_k$, $\omega_{k+1}$,... mit konstanten diskreten Abständen $\Delta\omega$ betrachtet. Es ist also $\omega_{k-1} = \omega_k - \Delta\omega$ und $\omega_{k+1} = \omega_k + \Delta\omega$. Jedem dieser diskreten Gierratenwerte wird ein Intervall der Breite $\Delta\omega$, in dessen Mitte der diskrete Gierratenwert liegt, zugeordnet. Zum Gierratenwert $\omega_k$ gehört damit das Intervall mit der unteren Grenze $\omega_k - \Delta\omega/2$ und der oberen Grenze $\omega_k + \Delta\omega/2$. Diese Intervalle werden im folgenden als Klassen bezeichnet.

Alle durch den Drehratensensor 21b gemessenen Werte der Gierrate werden nun der zugehörigen Klasse zugeordnet.

Damit erhält man das in Fig. 5 dargestellte Histogramm, welche auf der x-Achse die Klassen angibt und auf der y-Achse die Anzahl der in jede Klasse fallenden Gierratenwerte. Der Gierratenoffsetwert $\omega_{off3}$ kann aus diesem Histogramm auf verschiedene Arten bestimmt werden:

a) der Mittelwert der Klasse mit dem höchsten Zählerstand wir als Gierratenoffset weitergegeben oder

b) Der Gierratenoffset wird durch die Bildung eines gewichteten Mittelwertes aus der Klasse mit dem höchsten Zählerstand und den jeweils n benachbarten Klassen auf der linken und auf der rechten Seite gebildet. Dies geschieht durch die Beziehung

$$\omega_{off3} = \frac{\sum_{i=k-n}^{i=k+n} z_i \omega_i}{\sum_{i=k-n}^{i=k+n} z_i}$$

Dabei ist k der Index der Klasse mit dem höchsten Zählerstand, $\omega_i$ der Gierratenmittelwert der durch den Index i gekennzeichneten Klasse und $z_i$ der Zählerstand der durch den Index i gekennzeichneten Klasse.

c) Der Gierratenoffset wird durch die Bildung eines gewichteten Mittelwertes über alle Klassen gebildet. Dies kann durch eine lineare Berücksichtigung der Zählerstände mit

$$\omega_{off3} = \frac{\sum_{alle\ i} z_i \cdot \omega_i}{\sum_{alle\ i} z_i}$$

oder durch eine quadratische Berücksichtigung der Zählerstände mit

$$\omega_{off3} = \frac{\sum_{alle\ i} z_i^2 \cdot \omega_i}{\sum_{alle\ i} z_i^2}$$

erfolgen. Die quadratische Berücksichtigung der Zählerstände eignet sich insbesondere zur Unterdrückung von auftretenden Nebenmaxima der Gierrate im Histogramm.

Das Fehlerband kann beispielsweise als umso schmaler bestimmt werden, je ausgeprägter das Maximum des Histogramms ist.

Beim Histogrammverfahren empfiehlt es sich, für die Betrachtung lediglich Gierratenwerte bis zu einem vorzugebenden maximalen Betragswert zu betrachten. Weiterhin sollten aus dem Histogrammverfahren lediglich dann Offsetwerte ermittelt werden, wenn die Fahrzeuglängsgeschwindigkeit eine vorzugebende Größe überschreitet. Sollten diese Bedingungen nicht erfüllt sein, dann wird für das Histogrammverfahren der damit zuletzt ermittelte gültige Offsetwert verwendet, wobei sich das zugeordnete Fehlerband mit wachsendem zeitlichem Abstand aufweitet. Da das Histogrammverfahren ein statistisches Verfahren ist, benötigt es eine genügend große Anzahl von Meßwerten. Deshalb werden bei einem Start des Fahrzeuges die Histogrammwerte des letzten Zündungszyklus als Initialisierungswerte eingelesen.

Die Auffüllung der einzelnen Klassen (auch als Teilbereiche oder Intervalle bezeichnet) im Histogramm kann beispielsweise durch einfaches Aufsummieren der Anzahl der den einzelnen Klassen zuzuordnenden Gierratenwerte erfolgen. Im Ausführungsbeispiel erfolgt die Auffüllung der einzelnen Klassen im Histogramm allerdings nicht durch einfaches Aufsummieren der Anzahl der den einzelnen Klassen zuzuordnenden Gierratenwerte, sondern durch Tiefpassfilterung mit Exponentialcharakteristik. Die Werte $z_i$ bewegen sich dadurch stets zwischen 0 und dem Filtereingangswert $z_{FE}$, welcher beispielsweise $z_{FE} = 1$ sein kann. Diese Größen $z_i$ werden auch als Anzahlgrößen bezeichnet (da sie die Anzahl der den Teilbereichen zugeordneten Werte des Ausgangssignals repräsentieren). $z_i = 0$ bedeutet eine leere Klasse (= Teilbereich). Nimmt $z_i$ den Filtereingangswert $z_{FE}$, also beispielsweise $z_{FE} = 1$ an, bedeutet dies unendlich viele Einträge in dieser Klasse. Der Zählerstand $z_i = z_{FE}$ in einer Klasse, also z.B. $z_{FE} = 1$, kann damit niemals erreicht werden, es können lediglich Werte beliebig nahe dem Filtereingangswert, also z.B. 1, erreicht werden. Dadurch wird ein Überlaufen der Klassen bei zu vielen Einträgen vermieden.

Dabei wird jeder Klasse ein separater Tiefpass zugeordnet. Die den i-ten Tiefpass beschreibende diskrete Gleichung (=Differenzengleichung) lautet

```
z_i(tj) = (1 - dt/tauHist)*z_i(tj-1) + (dt/tauHist)*k   .
```

Dabei ist $z_i(tj)$ der Zählerstand der i-ten Klasse zum Abtastzeitpunkt tj. Der dem Abtastzeitpunkt tj unmittelbar vorausgehende Abtastzeitpunkt ist tj-1. Damit ist $z_i(tj-1)$ der Zählerstand der i-ten Klasse zum Abtastzeitpunkt tj-1. dt ist der zeitliche Abstand zwischen den Abtastzeitpunkten und tauHist ist die Filterzeitkonstante.

k stellt das Eingangssignal des Filters dar.

Der Faktor k nimmt den Wert Null an, wenn der gemessene Gierratenwert nicht in die entsprechende Klasse i fällt und nimmt den Wert Eins an, wenn der gemessene Gierratenwert in die entsprechende Klasse i fällt. Das bedeutet, dass der Tiefpass mit einem Eingangssignal angesteuert wird, welches zwei Werte annehmen kann. Diese beiden möglichen Eingangssignale können auch als "erstes Eingangssignal" (z.B. k=1) und "zweites Eingangssignal" (z.B. k=0) bezeichnet werden.

Die Filterzeitkonstante ergibt sich als max(10000/vxvRef*FakTau, 200s)

Das mathematische Symbol max kennzeichnet dabei den Maximalwert der beiden in der darauf folgenden Klammer stehenden Ausdrücke. vxvRef ist die zum momentanen Zeitpunkt vorliegende Fahrzeuggeschwindigkeit (gemessen in m/s), die Größe FakTau wird im folgenden näher erläutert. 200s bedeutet 200 Sekunden.

Die Größe FakTau nimmt den Wert 5*zimax an wenn eine Bewegung des Fahrzeugs vorliegt. Im Fahrzeugstillstand nimmt die Größe FakTau den Wert 150s (= 150 Sekunden) an. zimax ist dabei der Eintragswert der Klasse mit dem höchsten Zählerstand. Das führt dazu, dass FakTau einen kleinen Wert annimmt, wenn erst wenige Einträge im Histogramm vorliegen. Damit nimmt auch tauHist einen kleinen Wert an, d.h. die Filterzeitkonstante ist klein. Liegen dagegen sehr viele Histogrammeinträge vor, dann nimmt FakTau und damit tauHist einen großen Wert an. Damit wird die Filterzeitkonstante größer, das Filter wird weniger dynamisch. Das lässt sich auch so ausdrücken, dass die Filterzeit von der maximalen Histogrammhöhe abhängig ist, d.h. je ausgeprägter sich das Histogramm ausbildet, desto weniger kann es sich verändern.

Fällt der gemessene Gierratenwert nicht in die i-te Klasse, d.h. k=0, dann führt das Verschwinden des letzten Summanden in der das Filter beschreibenden Differenzengleichung dazu, dass der in die i-te Klasse eingetragene Wert etwas kleiner wird (Erniedrigung der Anzahlgröße). D.h. das Filter besitzt zusätzlich die nützliche Eigenschaft, dass die Einträge in die Klassen langsam abklingen. Damit wird verhindert, dass alle Klassen sich im Laufe der Zeit füllen und die Werte $z_i$ für alle Klassen sehr nahe beim Wert Eins liegen.

Bei k=1 erhöht sich die Anzahlgröße.

Es hat sich als geeignet erwiesen, nicht jeweils einzelne Gierratenwerte in das Histogramm einzutragen, sondern immer Mittelwerte aus 10 Gierratenwerten einzutragen. Dazu wird jeweils aus 10 ermittelten Gierratenwerten der arithmetische Mittelwert ermittelt und dieser arithmetische Mittelwert wird in das Histogramm (über den der entsprechenden Klasse zugeordneten Tiefpass) eingetragen. Liegt der Reglerzyklus bei 100 Millisekunden (d.h. alle 100 Millisekunden wird ein Offsetwert des Gierratensensors ermittelt), dann erfolgt jede Sekunde ein Histogrammeintrag.

Es soll hier betont werden, dass alle in den vorherigen Abschnitten genannten Zahlenwerte lediglich als Beispielwerte (welche sich in der Realisierung jedoch als geeignet erwiesen haben) anzusehen sind. Die Allgemeinheit der Erfindung soll damit in keiner Weise eingeschränkt werden.

Bei den auf den vorhergehenden Seiten beschriebenen und durch mathematische Formeln dargestellten gewichteten Mittelwertbildungen für die Größe $\omega_{off3}$ taucht immer wieder die Größe $z_i$ auf. Bei der Diskussion dieser Formeln hatte $z_i$ die anschauliche Bedeutung von Zählerständen, d.h. $z_i$ ist gleich der Zahl der Einträge im entsprechenden Teilbereich (=Klasse, Intervall). Durch die Einführung des Tiefpasses erhielt $z_i$ die Bedeutung einer Anzahlgröße, d.h. $z_i$ ist ein Maß für die Zahl der Einträge, aber nicht mehr zwangsläufig die Zahl der Einträge selbst. Bei der Implementierung der angegebenen Berechnungsformeln für die Größe $\omega_{off3}$ können für $z_i$ selbstverständlich auch die als Ausgangssignal der Tiefpässe gelieferten Anzahlgrößen verwendet werden. Auch dann ist sichergestellt, dass Intervalle mit einer höheren Zahl von Einträgen (Beispiel: 100 Einträge, $z_i$ sei z.B. 0.95) stärker gewichtet werden als Intervalle mit einer geringeren Zahl von Einträgen (Beispiel: 17 Einträge, $z_i$ sei z.B. 0.43).

Fig. 6 zeigt qualitativ ein mit dem Regressionsverfahren erhaltenes xy-Diagramm. Auf der x-Achse ist dabei die Fahrzeuglängsgeschwindigkeit v und auf der y-Achse eine Größe $\omega_{diff}$ aufgetragen. Diese Größe $\omega_{diff}$ ergibt sich durch $\omega_{diff} = \omega - \omega_{comp}$. Dabei ist $\omega$ die vom Drehratensensor gemessene Gierrate und $\omega_{comp}$ eine aus den Raddrehzahlen ermittelte Gierrate, gegeben durch

$$\omega_{comp} = \frac{\dfrac{v_r}{r+\Delta r_r}\cdot r - \dfrac{v_l}{r+\Delta r_l}\cdot r}{b} \quad .$$

Dabei sind $v_l$ und $v_r$ die tatsächlichen Radgeschwindigkeiten am linken und rechten Rad der nicht angetriebenen Achse, r ist der Nominalwert des Radradius, $r + \Delta r_1$ ist der tatsächliche Radius des linken Rades der nicht angetriebenen Achse, $r + \Delta r_r$ ist der tatsächliche Radius des rechten Rades der nicht angetriebenen Achse, b ist die Spurbreite.

Diese Ermittlung von $\omega_{comp}$ beruht darauf, daß während einer Kurvenfahrt unterschiedliche Raddrehzahlen der Innen- und Außenräder vorliegen.

Durch analytische Betrachtungen läßt sich zeigen, dass zwischen $\omega_{diff}$ und v näherungsweise ein linearer Zusammenhang $\omega_{diff} = \omega_{off} + m*v$ besteht. Dabei kennzeichnet $\omega_{off}$ den y-Achsendurchstoßpunkt und m die Steigung, welche zudem von den Radradien und der Spurbreite abhängt. Für die Steigung m gilt näherungsweise die Formel

$$m = \frac{1}{b}\cdot\left(\frac{\Delta r_r}{r}-\frac{\Delta r_l}{r}\right) \quad . \qquad (2)$$

Zu diskreten Zeitpunkten wird durch Messung von v und Ermittlung von $\omega_{diff}$ jeweils ein neuer Punkt in das xy-Diagramm eingetragen. Durch diese Punkte wird nun eine Regressionsgerade gelegt. Von dieser Regressionsgeraden werden der y-Achsendurchstoßpunkt und die Steigung m ermittelt. Der y-Achsendurchstoßpunkt stellt den Gierraten-offset $\omega_{off4}$ dar und aus der Steigung m lassen sich über die Gleichung (2) Unterschiede in den Radradien der nicht angetriebenen Räder ermitteln. Diese Unterschiede können durch Reifentoleranzen bedingt sein. Die Ermittlung dieser Unterschiede kann zur Einsparung eines Reifentoleranzabgleiches führen.

Hat die Steigung m den Wert Null, dann haben die nicht angetriebenen Räder dieselben Radradien.

Da die Berechnung von $\omega_{comp}$ nur für schlupffreie Räder gilt, sollten beim Regressionsverfahren die Räder der nicht angetriebenen Achse betrachtet werden.

Voraussetzung für die Gültigkeit des Regressionsverfahrens sind die folgenden drei Bedingungen:

1) Die Fahrzeuglängsgeschwindigkeit ist größer als eine vorgegebene Grenzgeschwindigkeit

2) Die Gierrate $\omega$ ist kleiner als eine vorgegebene Grenzgierrate

3) Die Fahrzeugquerbeschleunigung $a_y$ ist kleiner als eine vorgegebene Grenzquerbeschleunigung

Durch Punkt 1) wird sichergestellt, dass das Regressionsverfahren nicht bei Fahrzeugstillstand arbeitet.

Durch die Punkte 2) und 3) wird sichergestellt, dass sich das Fahrzeug nicht in einem fahrdynamischen Grenzbereich bewegt.

Das Regressionsverfahren erfordert eine Geschwindigkeitsvariation. Ist diese Geschwindigkeitsvariation zu gering, d.h. die Punkte im xy-Diagramm liegen in x-Achsenrichtung zu gedrängt, dann wird das Ergebnis ungenau. Das Fehlerband berücksichtigt beispielsweise die Varianz und den Mittelwert der Werte der Fahrzeuglängsgeschwindigkeit.

Aus den ermittelten Offsetwerten $\omega_{off1},...,\omega_{off4}$ sowie den zugehörigen Fehlerbändern mit den halben Breiten $\Delta\omega_{off1},...,\Delta\omega_{off4}$ wird in Block 24 ein korrigierter Offsetwert $\omega_{offkorr}$ ermittelt.

Die Ermittlung des korrigierten Offsetwertes kann auf verschiedene Arten erfolgen. Beispielsweise kann, wie in Fig. 7 dargestellt, der korrigierte Offsetwert als Mittelwert vom Minimum der Maximalwerte und vom Maximum der Minimalwerte ermittelt werden. Dazu werden aus dem durch das i-te Verfahren ermittelten Offsetwert $\omega_{offi}$ sowie dem zugehörigen Fehlerband mit der halben Breite $\Delta\omega_{offi}$ ein Minimalwert $\omega_{offi}$-$\Delta\omega_{offi}$ und ein Maximalwert $\omega_{offi} + \Delta\omega_{offi}$ berechnet. Nun werden entlang der $\omega$-Achse die Minimal- und Maximalwerte aller 4 Verfahren aufgetragen. Unter den 4 aufgetragenen Minimalwerten wird der größte Minimalwert (in Fig. 7 gekennzeichnet max($\omega_{offi}$-$\Delta\omega_{offi}$)) ermittelt. Ebenso wird unter den 4 aufgetragenen Maximalwerten der kleinste Maximalwert (in Fig. 7 gekennzeichnet min($\omega_{offi}$+$\Delta\omega_{offi}$)) ermittelt. Für den Fall, dass der größte Minimalwert kleiner als der kleinste Maximalwert ist, existiert eine gemeinsame Schnittmenge aller 4 Verfahren mit dem größten Minimalwert als unterer Grenze und dem kleinsten Maximalwert als oberer Grenze.

Durch die Mittelwertbildung zwischen dem Minimum aller Maximalwerte und dem Maximum aller Minimalwerte wird der Mittelpunkt der Schnittmenge ermittelt und als korrigierter Offsetwert $\omega_{offkorr}$ verwendet. Dieses Verfahren ist auch für den Fall anwendbar, dass keine gemeinsame Schnittmenge existiert, d.h. dass der größte Minimalwert größer als der kleinste Maximalwert ist.

Alternativ kann der korrigierte Offsetwert auch durch eine gewichtete Mittelwertbildung aus allen vier ermittelten Offsetwerten gewonnen werden. Hierbei ist es vorteilhaft, dass bei der gewichteten Mittelwertbildung das Gewicht desjenigen Offsetwertes am größten ist, dessen Fehlerbandbreite am kleinsten ist. Dies kann zum Beispiel durch die folgende gewichtete Mittelwertbildung geschehen:

$$\omega_{offkorr} = \frac{\sum_{i=1}^{4}\left(\frac{\omega_{off\,i}}{\Delta\omega_{off\,i}}\right)}{\sum_{i=1}^{4}\left(\frac{1}{\Delta\omega_{off\,i}}\right)} \quad .$$

Die Ermittlung des korrigierten Offsetwertes des Drehratensensors sollte in regelmäßigen oder auch in nicht regelmäßigen Zeitabständen wiederholt werden. Dabei erweisen sich in der Praxis Zeitabstände der Größenordnung 0.1 Sekunden bis 1 Sekunde als vorteilhaft.

**Patentansprüche**

1.  Verfahren zur Ermittlung des Offsetwertes ($\omega_{off3}$) des Ausgangssignals eines Fahrzeugsensors (21b),

    - bei dem die Werte des Ausgangssignals des Fahrzeugsensors (21b) ermittelt werden,
    - bei dem der Wertebereich des Ausgangssignals des Fahrzeugsensors (21b) in wenigstens zwei Teilbereiche eingeteilt wird,
    - bei dem die Werte des Ausgangssignals (21b) den Teilbereichen zugeordnet werden,
    - bei dem die Anzahl der den Teilbereichen zugeordneten Werte des Ausgangssignals (21b) repräsentierende Anzahlgrößen ($z_i$) ermittelt werden,

    **dadurch gekennzeichnet, dass**
    die Anzahlgrößen ($z_i$) durch Tiefpässe ermittelt werden, wobei jedem Teilbereich ein separater Tiefpass zugeordnet ist, wobei jeder Tiefpass mit einem Signal angesteuert wird, welches zwei Werte annehmen kann, einen ersten Wert, wenn der ermittelte Wert des Ausgangssignals in den entsprechenden Teilbereich fällt und einen zweiten Wert, wenn der ermittelte Wert des Ausgangssignals nicht in den entsprechenden Teilbereich fällt.

2.  Verfahren nach Anspruch 1, **dadurch gekennzeichnet, dass** jeder der Tiefpässe die seinem Teilbereich zugeordnete Anzahlgröße ($z_i$) ermittelt.

3.  Verfahren nach Anspruch 1, **dadurch gekennzeichnet, dass** es sich um einen Tiefpass mit Exponentialcharakteristik handelt.

4.  Verfahren nach Anspruch 2, **dadurch gekennzeichnet, dass**

    - derjenige Tiefpass, in dessen zugeordneten Teilbereich der zu einem Abtastzeitpunkt festgestellte Wert des Ausgangssignals ($\omega$) fällt, mit einem ersten Eingangssignal angesteuert wird und
    - diejenigen Tiefpässe, in deren zugeordnete Wertebereiche der zum selben Abtastzeitpunkt festgestellte Wert des Ausgangssignals nicht fällt, mit einem zweiten Eingangssignal angesteuert werden,
    - wobei sich das zweite Eingangssignal vom ersten Eingangssignal unterscheidet.

5.  Verfahren nach Anspruch 4, **dadurch gekennzeichnet, dass**

    - als Folge der Ansteuerung des Tiefpasses mit einem ersten Eingangssignal (k) eine Erhöhung der durch diesen Tiefpass ermittelten Anzahlgröße ($z_i$) erfolgt und
    - als Folge der Ansteuerung der Tiefpässe mit einem zweiten Eingangssignal (k) eine Erniedrigung der durch diese Tiefpässe ermittelten Anzahlgröße ($z_i$) erfolgt.

6.  Verfahren nach Anspruch 1, **dadurch gekennzeichnet,**

    - **dass** aus wenigstens zwei aufeinanderfolgend ermittelten Werten des Ausgangssignals ($\omega$) des Fahrzeugsensors ein erster Mittelwert auf eine erste Art ermittelt wird und
    - **dass** anstelle der Werte des Ausgangssignals des Fahrzeugsensors die Mittelwerte erster Art den Teilbereichen zugeordnet werden.

7.  Verfahren nach Anspruch 1, **dadurch gekennzeichnet, dass** der Fahrzeugsensor die Gierbewegung des Fahrzeugs erfasst.

8.  Verfahren nach Anspruch 7, **dadurch gekennzeichnet, dass** der ermittelte Offsetwert ($\omega_{off3}$) zur automatischen Abstandsregelung und/oder -steuerung (ACC) bei dem Kraftfahrzeug herangezogen wird.

9.  Verfahren nach Anspruch 1, **dadurch gekennzeichnet**

    - **dass** der Offsetwert ($\omega_{off3}$) durch die Bildung eines gewichteten Mittelwertes ermittelt wird und

- **daß** in der Bildung des gewichteten Mittelwerts derjenige Teilbereich mit der größten Anzahl der zugeordneten Werte des Ausgangssignals wobei sowie wenigstens ein benachbartes Intervall berücksichtigt werden.

10. Verfahren nach Anspruch 9, **dadurch gekennzeichnet dass** in die Gewichtungsfaktoren des gewichteten Mittelwertes die linearen oder quadratischen Werte der Anzahlgrößen ($z_i$) eingehen.

11. Vorrichtung zur Ermittlung des Offsetwertes ($\omega_{off3}$) des Ausgangssignals eines Fahrzeugsensors (21b), wobei der Sensor (21b) wenigstens eine Bewegung eines Fahrzeugs erfasst und Mittel (23c) vorgesehen sind, in denen

   - die Werte des Ausgangssignals des Fahrzeugsensors (21b) ermittelt werden,
   - der Wertebereich des Ausgangssignals des Fahrzeugsensors (21b) in wenigstens zwei Teilbereiche eingeteilt wird,
   - die Werte des Ausgangssignals (21b) den Teilbereichen zugeordnet werden und
   - Anzahlgrößen ($z_i$) ermittelt werden, welche die Anzahl der den Teilbereichen zugeordneten Werte des Ausgangssignals (21b) repräsentieren,

   **dadurch gekennzeichnet, dass**
   die Anzahlgrößen ($z_i$) durch Tiefpässe ermittelbar sind, wobei jedem Teilbereich ein separater Tiefpass zugeordnet ist, wobei jeder Tiefpass mit einem Signal ansteuerbar ist, welches zwei Werte annehmen kann, einen ersten Wert, wenn der ermittelte Wert des Ausgangssignals in den entsprechenden Teilbereich fällt und einen zweiten Wert, wenn der ermittelte Wert des Ausgangssignals nicht in den entsprechenden Teilbereich fällt.

12. Vorrichtung nach Anspruch 11, **dadurch gekennzeichnet, dass** mit jedem der Tiefpässe die seinem Teilbereich zugeordnete Anzahlgröße ($z_i$) ermittelbar ist.


**Claims**

1. Method for determining the offset value ($\omega_{off3}$) of the output signal of a vehicle sensor (21b),

   - in which the values of the output signal of the vehicle sensor (21b) are obtained,
   - in which the value range of the output signal of the vehicle sensor (21b) is divided into at least two subranges,
   - in which the values of the output signal (21b) are assigned to the subranges,
   - in which numerical variables ($z_i$) which represent the number of the values of the output signal (21b) which are assigned to the subranges are obtained,

   **characterized in that**
   the numerical variables ($z_i$) are obtained by means of low-pass filters, wherein a separate low-pass filter is assigned to each subrange, wherein each low-pass filter is activated with a signal which can assume two values, a first value when the obtained value of the output signal occurs in the corresponding subrange, and a second value when the value of the output signal does not occur in the corresponding subrange.

2. Method according to Claim 1, **characterized in that** each of the low-pass filters obtains the numerical variable ($z_i$) which is assigned to its subrange.

3. Method according to Claim 1, **characterized in that** the low-pass filter is a low-pass filter with an exponential characteristic.

4. Method according to Claim 2, **characterized in that that** low-pass filter in whose assigned subrange the value of the output signal ($\omega$) which is detected at a sampling time occurs is activated with a first input signal, and

   - those low-pass filters in whose assigned value ranges the value of the output signal which is detected at the same sampling time does not occur, are actuated with a second input signal,
   - wherein the second input signal differs from the first input signal.

5. Method according to Claim 4, **characterized in that**

   - as a result of the actuation of the low-pass filter with a first input signal (k), the numerical variable ($z_i$) which

is obtained by means of this low-pass filter is increased, and
- as a result of the actuation of the low-pass filters with a second input signal (k), the numerical variables ($z_i$) which are obtained by means of these low-pass filters are reduced.

6.  Method according to Claim 1, **characterized**

    - **in that** a first mean value is obtained in a first way from at least two successively obtained values of the output signal ($\omega$) of the vehicle sensor, and
    - **in that**, instead of the values of the output signal of the vehicle sensor, the mean values of the first type are assigned to the subranges.

7.  Method according to Claim 1, **characterized in that** the vehicle sensor senses the yawing movement of the vehicle.

8.  Method according to Claim 7, **characterized in that** the obtained offset value ($\omega_{off3}$) is used for automatic inter-vehicle closed-loop and/or open-loop control (ACC) in the motor vehicle.

9.  Method according to Claim 1, **characterized**

    - **in that** the offset value ($\omega_{off3}$) is obtained by forming a weighted mean value, and
    - **in that** that subrange with the largest number of assigned values of the output signal and at least one adjacent interval are taken into account in the formation of the weighted mean value.

10. Method according to Claim 9, **characterized in that** the linear or square values of the numerical variables ($z_i$) are included in the weighting factor of the weighted mean value.

11. Device for obtaining the offset value ($\omega_{off3}$) of the output signal of a vehicle sensor (21b), wherein the sensor (21b) senses at least one movement of a vehicle, and means (23c) are provided in which

    - the values of the output signal of the vehicle sensor (21b) are obtained,
    - the value range of the output signal of the vehicle sensor (21b) is divided into at least two subranges,
    - the values of the output signal (21b) are assigned to the subranges, and
    - numerical variables ($z_i$) which represent the number of the values of the output signal (21b) which are assigned to the subranges are obtained,

    **characterized in that**
    the numerical variables ($z_i$) can be obtained by means of low-pass filters, wherein a separate low-pass filter is assigned to each subrange, wherein each subrange can be actuated with a signal which can assume at least two values, a first value when the obtained value of the output signal appears in the corresponding subrange, and a second value when the obtained value of the output signal does not occur in the corresponding subrange.

12. Device according to Claim 11, **characterized in that** each of the low-pass filters can be used to obtain the numerical variable ($z_i$) which is assigned to its subrange.

**Revendications**

1.  Procédé de détermination de la valeur de décalage ($\omega_{off3}$) du signal de sortie d'un détecteur (21b) d'un véhicule,

    - dans lequel les valeurs du signal de sortie du détecteur (21b) du véhicule sont déterminées,
    - dans lequel la plage de valeurs du signal de sortie du détecteur (21b) du véhicule est divisée en au moins deux parties,
    - dans lequel les valeurs du signal de sortie (21b) sont associées aux parties,
    - dans lequel des nombres cardinaux ($z_i$) qui représentent le nombre des valeurs du signal de sortie (21b) associées aux parties sont déterminés,

    **caractérisé en ce que**
    les nombres cardinaux ($z_i$) sont déterminés par filtrage passe-bas,
    **en ce qu'**un filtrage passe-bas séparé est associé à chaque partie, chaque filtrage passe-bas étant commandé par un signal qui peut prendre deux valeurs, à savoir une première valeur lorsque la valeur déterminée du signal de sortie tombe dans la partie correspondante et une deuxième valeur lorsque la valeur du signal de sortie ne tombe pas dans la partie correspondante.

**2.** Procédé selon la revendication 1, **caractérisé en ce que** chacun des filtrages passe-bas détermine le nombre cardinal ($z_i$) associé à sa partie.

**3.** Procédé selon la revendication 1, **caractérisé en ce que** le filtrage passe-bas présente une caractéristique exponentielle.

**4.** Procédé selon la revendication 2, **caractérisé en ce que** le filtrage passe-bas dont la partie associée contient la valeur du signal de sortie ($\omega$) définie à un instant d'échantillonnage est commandé par un premier signal d'entrée, **en ce que** les filtrages passe-bas dont les plages de valeurs qui leur sont associées ne contiennent pas la valeur du signal de sortie déterminée au même instant d'échantillonnage sont commandés par un deuxième signal d'entrée et **en ce que** le deuxième signal d'entrée est différent du premier signal d'entrée.

**5.** Procédé selon la revendication 4, **caractérisé en ce qu'**une augmentation du nombre cardinal ($z_i$) déterminé par un filtrage passe-bas a lieu suite à la commande de ce filtrage passe-bas par un premier signal d'entrée (k) et **en ce qu'**une diminution des nombres cardinaux ($z_i$) déterminés par des filtrages passe-bas a lieu suite à la commande de ces filtrages passe-bas par un deuxième signal d'entrée (k).

**6.** Procédé selon la revendication 1, **caractérisé en ce qu'**une première valeur moyenne d'un premier type est déterminée à partir d'au moins deux valeurs déterminées successivement du signal de sortie ($\omega$) du détecteur du véhicule et **en ce que** les valeurs moyennes du premier type sont associées aux parties au lieu des valeurs du signal de sortie du détecteur du véhicule.

**7.** Procédé selon la revendication 1, **caractérisé en ce que** le détecteur du véhicule détecte le déplacement de lacet du véhicule.

**8.** Procédé selon la revendication 7, **caractérisé en ce que** la valeur déterminée du décalage ($\omega_{off3}$) est utilisée pour la régulation et/ou la commande automatique de distance (ACC) du véhicule automobile.

**9.** Procédé selon la revendication 1, **caractérisé en ce que** la valeur de décalage ($\omega_{off3}$) est déterminée par formation d'une valeur moyenne pondérée et **en ce que** la formation de la valeur moyenne pondérée tient compte de la partie qui présente le plus grand nombre de valeurs associées du signal de sortie ainsi que d'au moins un intervalle voisin.

**10.** Procédé selon la revendication 9, **caractérisé en ce que** les valeurs linéaires ou quadratiques des nombres cardinaux ($z_i$) interviennent dans les facteurs de pondération de la valeur moyenne pondérée.

**11.** Dispositif de détermination de la valeur de décalage ($\omega_{off3}$) du signal de sortie d'un détecteur (21b) d'un véhicule, le détecteur (21b) détectant au moins un déplacement d'un véhicule, et des moyens (23c) étant prévus dans lesquels :

   - les valeurs du signal de sortie du détecteur (21b) du véhicule sont déterminées, la plage de valeurs du signal de sortie du détecteur (21b) du véhicule étant divisée en au moins deux parties,
   - les valeurs du signal de sortie (21b) sont associées aux parties et
   - des nombres cardinaux ($z_i$) qui représentent le nombre des valeurs du signal de sortie (21b) associées aux parties sont déterminés,

   **caractérisé en ce que**
   les nombres cardinaux ($z_i$) peuvent être déterminés par filtrage passe-bas, un filtrage passe-bas séparé étant associé à chaque partie, chaque filtrage passe-bas pouvant être commandé par un signal qui peut prendre deux valeurs, à savoir une première valeur lorsque la valeur déterminée du signal de sortie est située dans la partie correspondante et une deuxième valeur lorsque la valeur du signal de sortie n'est pas située dans la partie correspondante.

**12.** Dispositif selon la revendication 11, **caractérisé en ce que** le nombre cardinal ($z_i$) associé à une plage partielle peut être déterminé par chacun des filtrages passe-bas correspondants.

**Fig. 1**

15a — Steuergerät 1

15m — Steuergerät m

11 — Weitere Eingangsdatenquellen

12 — Weitere Fahrzeugsteuerungssystemfunktionen

$\omega_{off\,korr}$

14 — Ermittlung eines korrigierten Ausgangssignals

13a — Ermittlungsart 1 — $\omega_{off\,1}$

13b — Ermittlungsart 2 — $\omega_{off\,2}$

13n — Ermittlungsart n — $\omega_{off\,n}$

10 — Fahrzeugsensor — $\omega$

16 — Fahrzeugsteuerungssystem

Fig. 2

12 — Weitere Fahrzeug-steuerungs-system-funktionen

15m — Steuergerät m

$\omega_{off\,korr}$

24 — Bestimmung eines korrigierten Gierraten-offsets

15a — Steuergerät 1

23a — Stillstands-abgleichs-verfahren

$\omega_{off\,1}$ / $\Delta\omega_{off\,1}$

23b — Lenkwinkel-verfahren

$\omega_{off\,2}$ / $\Delta\omega_{off\,2}$

23c — Histogramm-verfahren

$\omega_{off\,3}$ / $\Delta\omega_{off\,3}$

23d — Regressions-verfahren

$\omega_{off\,4}$ / $\Delta\omega_{off\,4}$

22 — Fahrzeug-längs-geschwindigkeit

$v$

21a — Lenkrad-winkelsensor

$\delta$

21b — Drehraten-sensor

$\omega$

21c — Raddrehzahl-sensoren

$n_i$

17

Fig. 3

$\omega_{offi}$
$\omega_{offmaxi}$
$\omega_{offmini}$

$\omega_{offmaxi}$

$\omega_{offi}$

$\omega_{offmini}$

$t_1$

$t$

EP 1 258 708 B1

Fig. 4

# Fig. 5

# Fig. 6

EP 1 258 708 B1

Fig. 7

$$\text{①}\quad \omega_{off\,1} - \Delta\,\omega_{off\,1} \; \vdash\!\!\!\overset{\textstyle\omega_{off\,1}}{\rule{4cm}{0.4pt}}\!\!\!\dashv \; \omega_{off\,1} + \Delta\,\omega_{off\,1}$$

$$\text{②}\quad \omega_{off\,2} - \Delta\,\omega_{off\,2} \; \vdash\!\!\!\overset{\textstyle\omega_{off\,2}}{\rule{3cm}{0.4pt}}\!\!\!\dashv \; \omega_{off\,2} + \Delta\,\omega_{off\,2}$$

$$\text{③}\quad \omega_{off\,3} - \Delta\,\omega_{off\,3} \; \vdash\!\!\!\overset{\textstyle\omega_{off\,3}}{\rule{1.5cm}{0.4pt}}\!\!\!\dashv \; \omega_{off\,3} + \Delta\,\omega_{off\,3}$$

$$\text{④}\quad \omega_{off\,4} - \Delta\,\omega_{off\,4} \; \vdash\!\!\!\overset{\textstyle\omega_{off\,4}}{\rule{5cm}{0.4pt}}\!\!\!\dashv \; \omega_{off\,4} + \Delta\,\omega_{off\,4}$$

$$\omega_{off}$$

$$\max\left(\omega_{off\,i} - \Delta\,\omega_{off\,i}\right) \qquad \min\left(\omega_{off\,i} + \Delta\,\omega_{off\,i}\right)$$

EP 1 258 708 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19722947 C1
- DE 19636443 A1

- DE 4419364 A1